# EUROPÄISCHE PATENTSCHRIFT

(11) **EP 2 098 441 B1**
(45) Veröffentlichungstag und Bekanntmachung des Hinweises auf die Patenterteilung: **27.10.2010**
(21) Anmeldenummer: 09007885.8
(22) Anmeldetag: 06.12.2007
(51) Int. Cl.: B62D 35/00

(54) **Luftleitvorrichtung für ein Fahrzeug**
Air conduction device for a vehicle
Dispositif de commande d'air pour véhicule

(30) Priorität: 18.12.2006 DE 102006059724
(43) Veröffentlichungstag der Anmeldung: 09.09.2009
(62) Teilanmeldung aus: 07023671.6
(73) Patentinhaber: HS Genion GmbH, 82205 Gilching (DE)
(72) Erfinder: Wegener, Fritz, 82205 Gilching (DE)
(74) Vertreter: advotec.

(56) Entgegenhaltungen:
- WO-A-2005/058677
- WO-A-2006/119746
- DE-A1- 10 222 082
- DE-U1- 29 909 639

## Beschreibung

Die Erfindung betrifft eine Luftleitvorrichtung für ein Fahrzeug nach dem Oberbegriff des Patentanspruchs 1.

Eine derartige Luftleitvorrichtung ist aus der Druckschrift WO 2006/119746 A1 bekannt und umfasst ein sich im Wesentlichen in Fahrzeugquerrichtung erstreckendes Spoilerelement, das mittels einer eine Bewegungsbahn vorgehenden Ausstellkinematik aus einer eingefahrenen Ruhestellung in eine maximal ausgefahrene Hubstellung verfahrbar ist. Das Spoilerelement ist mit einer Verstelleinrichtung versehen, bei deren Betätigung sich der Anstellwinkel des Spoilerelements gegenüber dem Fahrzeugaufbau ändert. Die Ausstellkinematik umfasst eine Viergelenkmechanik mit zwei Lenkern, die jeweils mit einem Ende karosseriefest angelenkt sind. Einer der Lenker ist mittels einer Antriebseinrichtung angetrieben.

Aus der DE 10 2004 030 571 A1 ist eine Luftleitvorrichtung bekannt, die im Bereich des Fahrzeughecks unterhalb einer Heckscheibe angeordnet ist und zur Verbesserung der Straßenlage des betreffenden Fahrzeugs dient. Als aerodynamisch wirksames Bauteil umfasst die Luftleitvorrichtung ein sich im Wesentlichen in Fahrzeugquerrichtung erstreckendes Spoilerelement, das mittels einer Ausstellkinematik aus einer eingefahrenen Ruhestellung, in der es beispielsweise von einer Karosseriemulde aufgenommen ist, und einer maximal ausgefahrenen Hubstellung verfahrbar ist, in der es aerodynamisch wirksam ist.

Eine Ausstellkinematik eines Heckspoilers umfasst in bekannter Weise beispielsweise linear bewegliche Hubzylinder oder auch beidseits an dem Spoilerelement angelenkte Viergelenkmechaniken, die die Ausstellbewegung des Spoilerelementes vorgeben. Bei den eine Linearbewegung vorgebenden Hubzylindern ist der Anstellwinkel des Spoilerelementes gegenüber der Fahrzeugkarosserie bzw. den Hubzylindern über die gesamte von der Ausstellkinematik vorgegebene Bewegungsbahn konstant. Es ist nicht möglich, die aerodynamische Wirkung des Spoilerelementes durch Veränderung von dessen Anstellwinkel zu beeinflussen. Bei Einsatz von Viergelenkmechaniken als Ausstellkinematik wird der Anstellwinkel des Spoilerelementes gegenüber der Fahrzeugkarosserie durch die Auslegung der Lenker der Viergelenkmechaniken vorgegeben. Eine unabhängige Anpassung des Anstellwinkels des Spoilerelementes ist nicht möglich.

Der Erfindung liegt die Aufgabe zugrunde, eine Luftleitvorrichtung für ein Fahrzeug bereitzustellen, welche im Vergleich zu dem vorstehend beschriebenen Stand der Technik in optimierter Weise an die jeweils vorliegenden Anforderungen an die Aerodynamik des betreffenden Fahrzeugs angepasst werden kann.

Diese Aufgabe ist erfindungsgemäß durch die Luftleitvorrichtung mit den Merkmalen des Patentanspruchs 1 und durch die Luftleiteinrichtung mit den Merkmalen des Patentanspruchs 3 gelöst.

Der Kern der Erfindung besteht mithin darin, dass eine Verstelleinrichtung vorgesehen ist, mittels der der Anstellwinkel des Spoilerelementes gegenüber der Ausstellkinematik einstellbar ist. Die Stellung des Spoilerelementes bzw. Spoilerblatts ist mithin durch die zusätzlich zu der Ausstellkinematik bereitgestellte Verstelleinrichtung veränderbar und damit an die jeweils bestehenden Anforderungen anpassbar, so dass die Aerodynamik und auch die Fahreigenschaften des betreffenden Fahrzeugs durch Veränderung des Anstellwinkels des Spoilerelements verbessert werden können.

Die Ausstellkinematik umfasst eine Viergelenkmechanik mit zwei Lenkern, von denen einer mittels einer Antriebseinrichtung angetrieben ist und die jeweils mit einem Ende karosseriefest angelenkt sind. Entweder kann eine Zwangssteuerung zur Betätigung der Verstelleinrichtung für den Anstellwinkel des Spoilerelementes erfolgen oder ein separater Antrieb zur Betätigung der Verstelleinrichtung vorgesehen sein. Bei einer Zwangssteuerung können die beiden Lenker mit ihren jeweiligen zweiten Enden an einem Koppelelement angelenkt sein, an welchem das Spoilerelement über einen Lenkhebel schwenkbar gelagert ist, der mit einem Steuerlenker verbunden ist, dessen dem Lenkhebel abgewandtes Ende einen karosseriefesten Fußpunkt bildet. Bei Betätigung der Viergelenkmechanik übt der Steuerlenker mithin ein Moment auf den Lenkhebel aus, wodurch der Anstellwinkel des Spoilerelementes gegenüber dem Koppelelement verändert wird.

Um das Verhältnis von Hub zu Anstellwinkel verändern zu können, ist der Fußpunkt vorzugsweise verstellbar ausgeführt.

Alternativ ist bei der als Viergelenkmechanik ausgeführten Antriebskinematik zum Ausstellen des Spoilerelementes, bei welcher eine von der Bewegung der Antriebskinematik unabhängige Veränderung des Anstellwinkels des Spoilerelementes möglich ist, das karosseriefest angelenkte Ende des nicht angetriebenen Lenkers der Viergelenkmechanik mittels einer zweiten Antriebseinrichtung verlagerbar, so dass sich bei einer Betätigung der zweiten Antriebseinrichtung der Anstellwinkel des Spoilerelementes verändert.

Bei einer speziellen Ausführungsform der Luftleitvorrichtung nach der Erfindung arbeitet die Verstelleinrichtung zur Einstellung des Anstellwinkels des Spoilerelementes in Abhängigkeit vom Hub des Spoilerelementes, wobei sie durch die Ausstellkinematik zwangsgesteuert ist. Es erfolgt mithin bei Betätigung der Ausstellkinematik stets eine Veränderung des Anstellwinkels des Spoilerelementes gegenüber der Ausstellkinematik.

Weitere Vorteile und vorteilhafte Ausgestaltungen des Gegenstandes der Erfindung sind der Beschreibung, der Zeichnung und den Patentansprüchen entnehmbar.

Fünf Ausführungsbeispiele einer Luftleitvorrichtung sind in der Zeichnung schematisch vereinfacht dargestellt und werden in der nachfolgenden Beschreibung näher erläutert. Es zeigt
- Fig.1: eine perspektivische Ansicht eines Heckbereichs eines Kraft- fahrzeugs mit einer ein ausstellbares Spoilerelement aufweisenden Luftleit- vorrichtung;
- Fig. 2: einen schematischen Schnitt durch die nicht durch die Patentansprü- che abgedeckte Luftleitvorrichtung des in Fig. 1 dargestellten Fahrzeugs;
- Fig. 3: einen schematischen Schnitt durch eine zweite, nicht durch die Patentansprüche abgedeckte Ausführulgsform einer Luftleitvorrichtung;
- Fig. 4: einen schematischen Schnitt durch eine dritte, nicht durch die Patentansprüche abgedeckte Ausführungsform einer Luftleitvorrichtung;
- Fig. 5: einen schematischen Schnitt durch eine mittels einer Vierge- lenkmechanik ausstellbaren Luftleitvorrichtung nach der Erfindung; und
- Fig. 6: eine alternative Ausführungsform einer mittels einer Vierge- lenkmechanik ausstellbaren Luftleitvorrichtung nach der Erfindung.

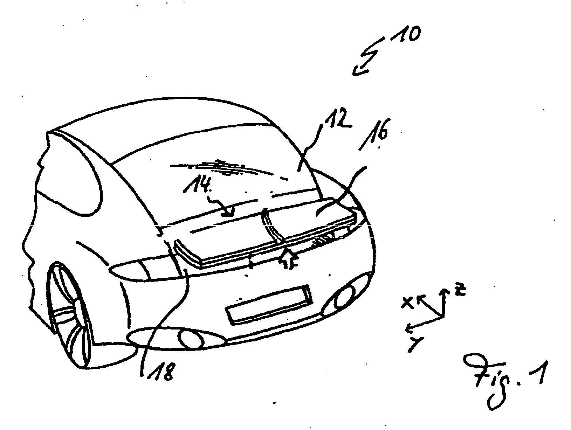

In Fig. 1 ist ein Kraftfahrzeug 10 dargestellt, das heckseitig unterhalb einer Heckscheibe 12 eine einen Heckspoiler darstellende Luftleitvorrichtung aufweist. Die Luftleitvorrichtung 14 umfasst ein sich im Wesentlichen in Fahrzeugquerrichtung erstreckendes Spoilerblatt bzw. -element 16, das mittels einer beidseits angeordneten Ausstellkinematik zwischen einer in einer heck-seitigen Karosseriemulde 18 angeordneten Ruhestellung und einer ausgestellten Betriebsstellung, die eine aerodynamisch wirksame Position darstellt, verfahrbar ist.

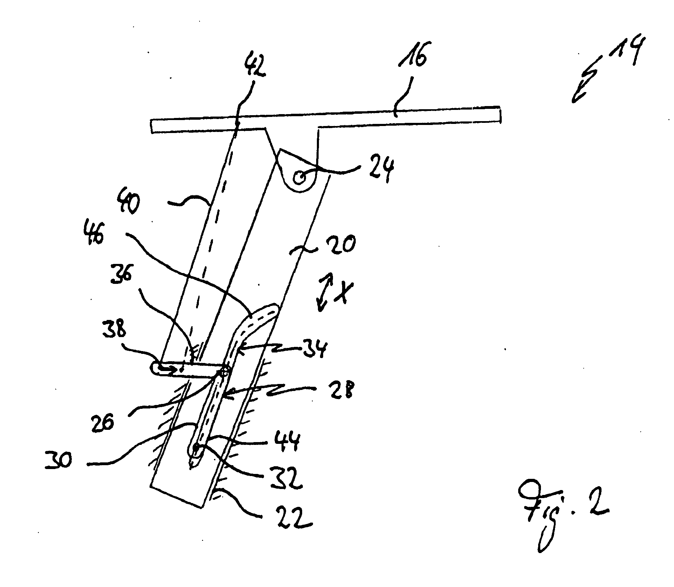

Wie Fig. 2 zu entnehmen ist, umfasst die Ausstellkinematik zum Ausfahren des Spoilerblatts 16 beidseits symmetrisch bezüglich einer Fahrzeuglängsmittelebene jeweils einen als linear arbeitende Hubeinrichtung dienenden Hubzylinder 20, der gemäß einem Doppelpfeil X mittels einer nicht näher dargestellten, hydraulischen oder elektrischen Betätigungseinrichtung in einer karosseriefesten Führungsbahn 22 verfahrbar ist.

An seinem oberen Ende ist an dem Hubzylinder 20 über ein Gelenk 24, dessen Schwenkachse sich in Fahrzeugquerrichtung erstreckt, das Spoilerelement 16 schwenkbar angelenkt.

Des Weiteren ist an dem Hubzylinder 20 in einem von dem Gelenk 24 entfernten Bereich über ein Gelenk 26 ein als Winkel ausgebildeter Steuerhebel 28 angelenkt, dessen einer Schenkel 30 in seinem dem Gelenk 26 abgewandten Endbereich einen Führungszapfen 32 aufweist, der in einer karosseriefesten Kulissenbahn 34 gerührt ist. Der zweite Schenkel 36 des Steuerhebels 28 weist in seinem dem Gelenk 26 abgewandten Endbereich einen in Richtung der Achse des Schenkels 36 verstellbaren Anlenkpunkt 38 für ein Steuergestänge 40 auf, welches den Schenkel 36 des Steuerhebels 28 mit dem Spoilerelement 16 verbindet. Hierzu ist an dem Spoilerelement 16 ein Anlenkpunkt 42 ausgebildet.

Die Kulissenbahn 34 weist einen parallel zur Bewegungsrichtung X des Hubzylinders 20 ausgerichteten unteren Abschnitt 44 auf, der oben in einen gebogenen und bezüglich der Bewegungsrichtung X des Hubzylinders 20 geneigten Verstellabschnitt 46 übergeht.

Die in Fig. 2 dargestellte Luftleitvorrichtung 14 arbeitet in nachfolgend beschriebener Weise.

Ausgehend von der dargestellten und abgesenkten Ruhestellung des Spoilerelementes 16 wird der Hubzylinder 20 gemäß der Bewegungsrichtung X angehoben. Hierbei gleitet der Führungszapfen 32 des Steuerhebels 28 zunächst in dem unteren Abschnitt 44 der Kulissenbahn 34, wobei der Steuerhebel 28 seine Position gegenüber dem die Ausstellkinematik darstellenden Hubzylinder 20 beibehält. Sobald der Führungszapfen 32 bei der Hubbewegung des Hubzylinders 20 in den Verstellabschnitt 46 der Kulissenbahn 34 kommt, erfährt der Steuerhebel 28 einen Schwenkbewegung, die über das Steuergestänge 40 auf das Spoilerelement 16 übertragen wird, so dass auch das Spoilerelement 16 im vorliegenden Fall entgegen dem Uhrzeigersinn verschwenkt wird.

Das Verhältnis zwischen dem Hub und dem durch den Verstellabschnitt 46 eingestellten Schwenkwinkel des Spoilerelementes 16 kann durch eine Veränderung des Anlenkpunkts 38 des Steuergestänges 40 an dem Schenkel 36 des Steuerhebels 28 verändert werden.

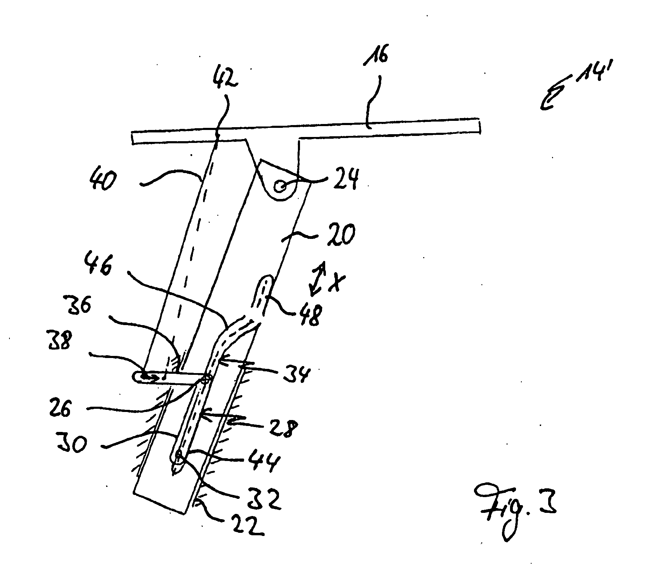

Das in Fig. 3 dargestellte Ausführungsbeispiel einer Luftleitvorrichtung 14' unterscheidet sich von derjenigen nach Fig. 2 lediglich dadurch, dass sich an dem gekrümmten Verstellabschnitt 46 der Kulissenbahn 34 oben ein ebenfalls parallel zur Bewegungsrichtung des Hubzylinders 20 angeordneter Verriegelungsabschnitt 48 anschließt, so dass erreicht werden kann, dass die von dem Steuergestänge 40 und dem Steuerhebel 28 gebildete Verstelleinrichtung für den Anstellwinkel des Spoilerelementes 16 verriegelt ist, wenn der Führungszapfen 32 des Steuerhebels 28 in dem Verriegelungsabschnitt 48 angeordnet ist. Damit wird ein versehentliches Verschwenken des Spoilerelementes 16 gegenüber dem Hubzylinder 20 verhindert.

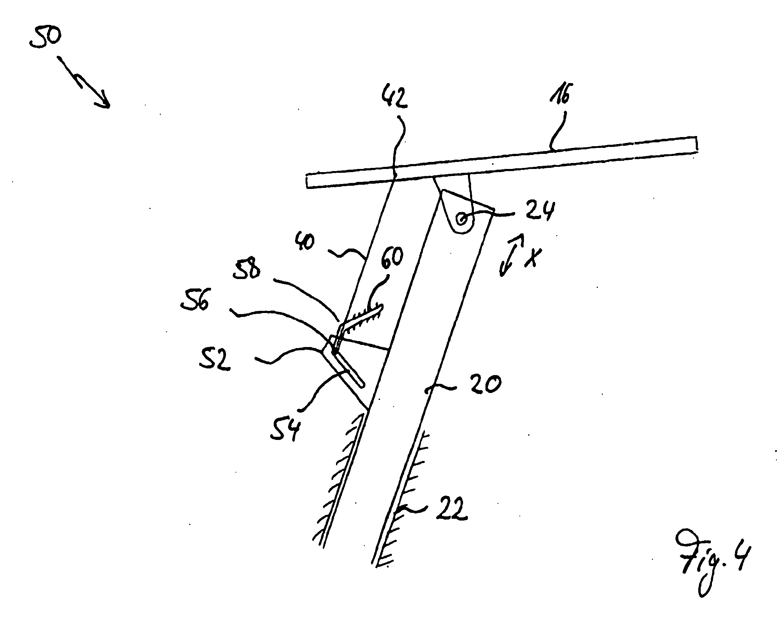

In Fig. 4 ist eine alternative Ausführungsform einer Luftleitvorrichtung 50 dargestellt, die entsprechend den vorstehend beschriebenen Ausführungsbeispielen ein Spoilerelement 16 aufweist, das über ein Gelenk 24 an einem Hubzylinder 20 angelenkt ist, der zum Ausfahren oder Einfahren des Spoilerelementes 16 gemäß einem Doppelpfeil X verfahrbar ist. Der Hubzylinder 20 weist eine in radialer Richtung abstehende Lasche 52 auf, an der eine hubzylinderfeste Führungsbahn 54 ausgebildet ist, die gegenüber der Achse des Hubzylinders 20 geneigt ist. In der Führungsbahn 54 ist ein Führungszapfen 56 geführt, der an einem Ende eines Steuergestänges 40 ausgebildet ist, welches mit dem dem Führungszapfen 56 abgewandten Ende über einen Anlenkpunkt 42 an dem Spoilerelement 16 angelenkt ist. Der Anlenkpunkt 42 ist veränderbar bzw. verstellbar.

Des Weiteren weist die Luftleitvorrichtung 50 eine karosseriefeste Kulissenbahn 58 auf, die einen unteren, parallel zur Achse und damit zur Bewegungsrichtung X des Hubzylinders 20 ausgerichteten Abschnitt aufweist, an dem sich oben ein gegenüber der Achse des Hubzylinders 20 geneigter und gegenläufig zu der Führungsbahn 54 ausgerichteter Verstellbereich 58 anschließt. Beim Betätigen des Hubzylinders 20 ist der Führungszapfen 56, der am unteren Ende des Steuergestänges 40 ausgebildet ist, auch in der Kulissenbahn 58 geführt, wobei die Führung in dem Verstellbereich 60 ein Verschwenken und damit ein Ändern des Anstellwinkels des Spoilerelementes 16 bewirkt.

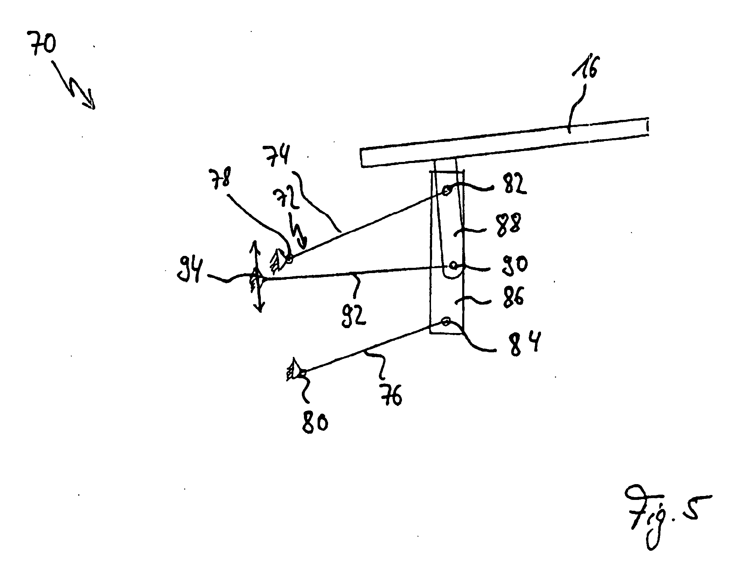

In Fig. 5 ist eine Luftleitvorrichtung 70 dargestellt, die ebenfalls ein Spoilerelement 16 aufweist, das aus einer eingefahrenen Ruhestellung in eine ausgefahrene Hubstellung bzw. Wirkstellung verfahrbar ist. Die Luftleitvorrichtung 70 weist hierzu eine Ausstellkinematik auf, die mit einer Viergelenkmechanik 72 ausgebildet ist, welche zwei Lenker 74 und 76 aufweist, die jeweils mit einem Ende über ein Gelenk 78 bzw. 80 karosseriefest angelenkt sind. Mit ihren den Gelenken 78 und 80 abgewandten Enden sind die Lenker 74 und 76 jeweils über ein Gelenk 82 bzw. 84 an einem Koppelelement 86 angelenkt, an welchem wiederum über einen Lenkhebel 88 das Spoilerelement 16 schwenkbar gelagert ist. Der Drehpunkt des Lenkers 74 und derjenige des Lenkhebels 88 an dem Koppelelement 86 liegen auf einer gemeinsamen Achse.

An dem dem Spoilerelement 16 abgewandten Ende ist über ein weiteres Gelenk 90 ein Steuerlenker 92 befestigt, der mit seinem dem Koppelelement 86 abgewandten Enden einen karosseriefest angebundenen Fußpunkt 94 bildet, der zur Veränderung des Verhältnisses von Hub zu Anstellwinkel des Spoilerelementes 16 verstellbar ist.

Die Luftleitvorrichtung 70 arbeitet in nachfolgend beschriebener Weise.

Ausgehend von einer abgesenkten Ruhestellung wird einer der Lenker 74 und 76 der Viergelenkmechanik 72 angetrieben, so dass das Spoilerelement 16 in seine ausgestellte Wirkstellung verfahren wird. Dabei übt der Steuerlenker 92 eine Kraft auf den Lenkhebel 88 aus, so dass sich durch Verschwenken des Lenkhebels 88 um seine Schwenkachse der Anstellwinkel des Spoilerelementes 16 ändert. Beim Einfahren des Spoilerelementes 16 werden bei der in Fig. 5 gezeigten Darstellung die Lenker 74 und 76 im Uhrzeigersinn um die Achsen der Gelenke 78 und 80 verschwenkt, so dass der Lenker 92 eine Zugbewegung auf den Lenkhebel 88 ausübt und das Spoilerelement 16 ebenfalls im Uhrzeigersinn verschwenkt wird.

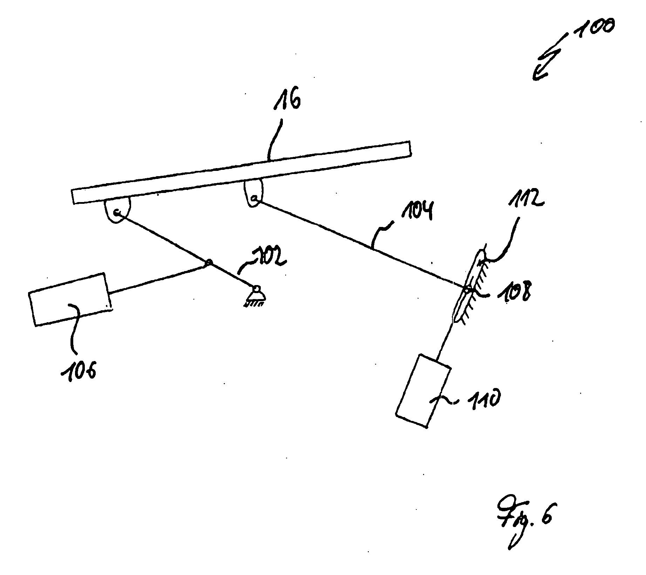

In Fig. 6 ist eine Luftleitvorrichtung 100 dargestellt, die ebenfalls ein Spoilerelement 16 aufweist, das zwischen einer abgesenkten Ruhestellung und einer ausgestellten Betriebsstellung verschwenkbar ist. Als Ausstellkinematik weist die Luftleitvorrichtung 100 ebenfalls eine Viergelenkmechanik auf, die zwei Lenker 102 und 104 umfasst, die jeweils mit einem Ende an das Spoilerelement 16 angelenkt sind und mit ihrem jeweiligen anderen Ende karosseriefest angelenkt sind.

Der Lenker 102 ist mit einem das Verschwenken der Viergelenkmechanik bewirkenden Antriebsmotor 106 verbunden, der das Ausstellen des Spoilerelementes 16 bewirkt. Der karosseriefeste Anlenkpunkt 108 des nicht angetriebenen Lenkers 104 ist mit einem zweiten Antriebsmotor 110 verbunden, der die Lage des Anlenkpunkts 108 verändern kann. Durch Verschiebung des Anlenkpunkts 108 in einer Führungsbahn 112 verändert sich der Anstellwinkel des Spoilerelementes 16 gegenüber der Fahrzeugkarosserie und damit die aerodynamische Wirkung des Spoilerelementes 16.

### Bezugszeichen

- 10: Kraftfahrzeug
- 12: Heckscheibe
- 14, 14': Leiteinrichtung
- 16: Spoilerelement
- 18: Karosseriemulde
- 20: Hubzylinder
- 22: Führungsbahn
- 24: Gelenk
- 26: Gelenk
- 28: Steuerhebel
- 30: Schenkel
- 32: Führungszapfen
- 34: Kulissenbahn
- 36: Schenkel
- 38: Anlenkpunkt
- 40: Steuergestänge
- 42: Anlenkpunkt
- 44: unterer Abschnitt
- 46: Verstellabschnitt
- 48: Verriegelungsabschnitt
- 50: Luftleitvorrichtung
- 52: Lasche
- 54: Führungsbahn
- 56: Führungszapfen
- 58: Kulissenbahn
- 60: Verstelleinrichtung
- 70: Luftleitvorrichtung
- 72: Viergelenkmechanik
- 74: Lenker
- 76: Lenker
- 78: Gelenk
- 80: Gelenk
- 82: Gelenk
- 84: Gelenk
- 86: Koppelelement
- 88: Lenkhebel
- 90: Gelenk
- 92: Steuerlenker
- 94: Fußpunkt
- 100: Luftleitvorrichtung
- 102: Lenker
- 104: Lenker
- 106: Antriebsmotor
- 108: Anlenkpunkt
- 110: Antriebsmotor
- 112: Führungsbahn

## Patentansprüche

1. Luftleitvorrichtung für ein Fahrzeug, umfassend ein sich im Wesentlichen in Fahrzeugquerrichtung erstreckendes Spoilerelement (16), sowie eine Bewegungsbahn vorgebende Ausstellkinematik, mittels derer das Spoilerelement (16) aus einer eingefahrenen Ruhestellung in eine maximal ausgefahrene Hubstellung verfahrbar ist, wobei das Spoilerelement (16) mit einer Verstelleinrichtung versehen ist, bei deren Betätigung der Anstellwinkel des Spoilerelementes (16) gegenüber dem Fahrzeugaufbau verändert wird, wobei die Ausstellkinematik mindestens eine Viergelenkmechanik (72) mit zwei Lenkern (74, 76) umfasst, von denen einer mittels einer Antriebseinrichtung angetrieben ist und die jeweils mit einem Ende karosseriefest angelenkt sind, **dadurch gekennzeichnet, dass** die beiden Lenker (74, 76) mit ihren jeweiligen zweiten Enden an ein Koppelelement (86) angelenkt sind, an welchem das Spoilerelement (16) über einen Lenkhebel (88) schwenkbar gelagert ist, der mit einem Steuerlenker (92) verbunden ist, dessen dem Lenkhebel (88) abgewandtes Ende einen karosseriefesten Fußpunkt (94) bildet.

2. Luftleitvorrichtung nach Anspruch 1, **dadurch gekennzeichnet, dass** der Fußpunkt (94) verstellbar ist.

3. Luftleitvorrichtung für ein Fahrzeug, umfassend ein sich im Wesentlichen in Fahrzeugquerrichtung erstreckendes Spoilerelement (16), sowie eine Bewegungsbahn vorgebende Ausstellkinematik, mittels derer das Spoilerelement (16) aus einer eingefahrenen Ruhestellung in eine maximal ausgefahrene Hubstellung verfahrbar ist, wobei das Spoilerelement (16) mit einer Verstelleinrichtung versehen ist, bei deren Betätigung der Anstellwinkel des Spoilerelementes (16) gegenüber dem Fahrzeugaufbau verändert wird; wobei die Ausstellkinematik mindestens eine Viergelenkmechanik mit zwei Lenkern (102, 104) umfasst, von denen einer mittels einer Antriebseinrichtung (106) angetrieben ist und die jeweils mit einem Ende karosseriefest angelenkt sind, **dadurch gekennzeichnet, dass** das karosseriefest angelenkte Ende des nicht angetriebenen Lenkers (104) der Viergelenkmechanik mittels einer zweiten Antriebseinrichtung (110) verlagerbar ist, so dass sich der Anstellwinkel des Spoilerelementes (16) verändert.

4. Luftleitvorrichtung nach Anspruch 1 oder 3, **dadurch gekennzeichnet, dass** die Verstelleinrichtung in Abhängigkeit vom Hub des Spoilerelementes (16) arbeitet und durch die Ausstellkinematik zwangsgesteuert ist.

## Claims

1. Air conduction device for a vehicle, comprising a spoiler element (16) which extends essentially in the transverse direction of the vehicle, and a deployment mechanism which predefines a movement path and by means of which the spoiler element (16) can be moved out of a retracted position of rest into a lifted position in which it is extended to a maximum degree, wherein the spoiler element (16) is provided with an adjustment device, whose activation causes the attack angle of the spoiler element (16) with respect to the vehicle body to be changed, wherein the deployment mechanism comprises at least one four joint mechanism (72) with two links (74, 76), one of which is driven by means of a drive device and which are each coupled at one end to the vehicle bodywork in a fixed fashion, **characterized in that** the two links (74, 76) are coupled by their respective second ends to a coupling element (86) on which the spoiler element (16) is pivotably mounted by means of a steering lever (88) which is connected to a control rod (92), whose end which faces away from the steering lever (88) forms a base point (94) which is fixed to the vehicle bodywork.

2. Air conduction device according to Claim 1, **characterized in that** the base point (94) is adjustable.

3. Air conduction device for a vehicle, comprising a spoiler element (16) which extends essentially in the transverse direction of the vehicle, and a deployment mechanism which predefines a movement path and by means of which the spoiler element (16) can be moved out of a retracted position of rest into a lifted position in which it is extended to a maximum degree, wherein the spoiler element (16) is provided with an adjustment device, whose activation causes the attack angle of the spoiler element (16) with respect to the vehicle body to be changed, wherein the deployment mechanism comprises at least one four joint mechanism with two links (102, 104), one of which is driven by means of a drive device (106) and which are each coupled at one end to the vehicle bodywork in a fixed fashion, **characterized in that that** end of the non-driven link (104) of the four joint mechanism which is coupled fixed to the bodywork can be moved by means of a second drive device (110) so that the attack angle of the spoiler element (16) changes.

4. Air conduction device according to Claim 1 or 3, **characterized in that** the adjustment device operates as a function of the travel of the spoiler element (16) and is forcibly controlled by the deployment mechanism.

## Revendications

1. Dispositif de guidage d'air pour un véhicule, comprenant un élément déflecteur (16) s'étendant essentiellement dans la direction transversale du véhicule, ainsi qu'une cinématique d'orientation prédéfinissant une voie de déplacement, au moyen de laquelle l'élément déflecteur (16) peut être déplacé d'une position de repos rentrée dans une position de levage déployée au maximum, l'élément déflecteur (16) étant pourvu d'un dispositif de réglage, dont l'actionnement modifie l'angle d'inclinaison de l'élément déflecteur (16) par rapport à la carrosserie du véhicule, la cinématique d'orientation comprenant au moins un mécanisme à quadrilatère articulé (72) avec deux bras oscillants (74, 76) dont l'un est entraîné au moyen d'un dispositif d'entraînement et lesquels sont chacun articulés fixement à la carrosserie par une extrémité, **caractérisé en ce que** les deux bras oscillants (74, 76) sont articulés par leur deuxième extrémité respective à un élément d'accouplement (86), sur lequel l'élément déflecteur (16) est monté de manière pivotante par le biais d'un levier de direction (88) qui est connecté à un bras de commande (92) dont l'extrémité opposée au levier de direction (88) forme un point de base (94) fixé à la carrosserie.

2. Dispositif de guidage d'air selon la revendication 1, **caractérisé en ce que** le point de base (94) est réglable.

3. Dispositif de guidage d'air pour un véhicule, comprenant un élément déflecteur (16) s'étendant essentiellement dans la direction transversale du véhicule, ainsi qu'une cinématique d'orientation prédéfinissant une voie de déplacement, au moyen de laquelle l'élément déflecteur (16) peut être déplacé d'une position de repos rentrée dans une position de levage déployée au maximum, l'élément déflecteur (16) étant pourvu d'un dispositif de réglage, dont l'actionnement modifie l'angle d'inclinaison de l'élément déflecteur (16) par rapport à la carrosserie du véhicule, la cinématique d'orientation comprenant au moins un mécanisme à quadrilatère articulé avec deux bras oscillants (102, 104) dont l'un est entraîné au moyen d'un dispositif d'entraînement (106) et lesquels sont chacun articulés fixement à la carrosserie par une extrémité, **caractérisé en ce que** l'extrémité du bras oscillant non entraîné (104), du mécanisme à quadrilatère articulé, qui est articulée fixement à la carrosserie, peut être déplacée au moyen d'un deuxième dispositif d'entraînement (110), de sorte que l'angle d'inclinaison de l'élément déflecteur (16) soit modifié.

4. Dispositif de guidage d'air selon la revendication 1 ou 3, **caractérisé en ce que** le dispositif de réglage fonctionne en fonction du levage de l'élément déflecteur (16) et est commandé par force par la cinématique d'orientation.
